(19) **Europäisches Patentamt European Patent Office Office européen des brevets**

(11) **EP 2 962 997 B1**

(12) **EUROPEAN PATENT SPECIFICATION**

(45) Date of publication and mention of the grant of the patent:
**11.07.2018 Bulletin 2018/28**

(21) Application number: **14779478.8**

(22) Date of filing: **01.04.2014**

(51) Int Cl.:
*C02F 1/469* (2006.01)     *B01D 61/46* (2006.01)
*C02F 5/00* (2006.01)     *B01D 61/50* (2006.01)
*B01D 61/52* (2006.01)     *C02F 5/06* (2006.01)

(86) International application number:
**PCT/JP2014/059671**

(87) International publication number:
**WO 2014/163094 (09.10.2014 Gazette 2014/41)**

(54) **WATER TREATMENT SYSTEM**

WASSERBEHANDLUNGSSYSTEM

SYSTÈME DE TRAITEMENT DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2013 JP 2013076161**

(43) Date of publication of application:
**06.01.2016 Bulletin 2016/01**

(73) Proprietor: **Mitsubishi Heavy Industries, Ltd. Tokyo 108-8215 (JP)**

(72) Inventors:
 • **UKAI, Nobuyuki**
   **Tokyo 108-8215 (JP)**
 • **SUZUKI, Hideo**
   **Tokyo 108-8215 (JP)**
 • **YOSHIOKA, Shigeru**
   **Tokyo 108-8215 (JP)**
 • **TAKEUCHI, Kazuhisa**
   **Tokyo 108-8215 (JP)**
 • **SATOU, Jun**
   **Tokyo 108-8215 (JP)**
 • **SAKURAI, Hideaki**
   **Tokyo 108-8215 (JP)**
 • **OKINO, Susumu**
   **Tokyo 108-8215 (JP)**
 • **NAKASHOJI, Hiroshi**
   **Tokyo 108-8215 (JP)**

(74) Representative: **Henkel, Breuer & Partner Patentanwälte Maximiliansplatz 21 80333 München (DE)**

(56) References cited:
WO-A1-2012/129532     WO-A1-2013/009485
WO-A1-2014/020758     WO-A1-2014/042077
JP-A- 2001 087 769     JP-A- 2001 129 551
JP-A- 2010 513 018     JP-A- 2012 232 233
US-A1- 2010 242 995

**Description**

Technical Field

The present invention relates to a water treatment system used to carry out a desalination treatment.

Background Art

A purification treatment such as the removal of heavy metal components or suspended particles or the decomposition and removal of organic substances is carried out on industrial wastewater from plants. In places having difficulty in securing industrial water, treated water that has been subjected to a purification treatment is recycled as industrial water. In this case, after heavy metal components, suspended particles, and organic substances are removed, a desalination treatment for removing ion components contained in wastewater is carried out.

As an example of a desalination device, PTL 1 discloses a desalination device in which a liquid passing-type capacitor, which carries out the removal and collection (recycling) of ion components in water to be treated using an electrostatic force, and a reverse osmosis membrane device installed downstream of the liquid passing-type capacitor are combined together.

Among ions contained in water, monovalent cations such as $Na^+$, $K^+$, and $NH^{4+}$ or monovalent anions such as $Cl^-$ and $F^-$ are ions having a high solubility in water. Meanwhile, divalent metallic ions such as $Ca^{2+}$ and $Mg^{2+}$, divalent anions such as $SO_4^{2-}$ and $CO_3^{2-}$, and a silica ion are components constituting a scale. Since a salt or silica to which an ion of the component constituting a scale is bonded has a low solubility in water, the salt or silica is likely to be precipitated as a scale. For example, when water containing a large amount of ions that serve as scale components flows into the reverse osmosis membrane device and a state exceeding the saturation concentration is maintained on the inflow side of the reverse osmosis membrane, a scale is precipitated in the reverse osmosis membrane and the treatment capacity degrades. In the constitution described in PTL 1, since water is sent to the reverse osmosis membrane device after ions are removed using the liquid passing-type capacitor, it is possible to reduce the treatment load in the reverse osmosis membrane device.

PTL 2 discloses a polarized electrode flow-through capacitor for deionizing water, the flow-through capacitor comprising at least two porous capacitor electrodes having a surface area for electrostatic adsorption and desorption of ions, a flow channel for the passage of an ion-containing fluid, said flow channel in ionic communication with said at least two porous electrodes, and at least one ionic group held within the pore volume of each of said porous electrodes.

PTL 3 discloses a system for removing ionic species from a desalination unit, the system comprising a desalination unit and a precipitation unit. In one embodiment, the desalination unit comprises a stack of supercapacitor desalination cells, said supercapacitor desalination cells comprising a first electrode, a second electrode and a spacer provided therebetween, wherein the first electrode and the second electrode may additionally include an ion exchange membrane.

Citation List

Patent Literature

[PTL 1] Japanese Patent No. 4135802
[PTL 2] International Patent Application Publication No. WO 2012/129532 A1
[PTL 3] United States Patent Application Publication No. US 2010/242995 A1

Summary of Invention

Technical Problem

An ordinary liquid passing-type capacity as described in PTL 1 has a low selectivity in terms of the valence of an ion to be removed. Therefore, not only ions serving as the scale components (scale component ions) but also components that are not easily precipitated as a scale, for example, $Na^+$ and $Cl^-$ are inevitably removed at the same time. In a case in which water containing a relatively large amount of the scale component ions is treated using the desalination device of PTL 1, water containing a high concentration of the scale component ions since the scale component ions are not sufficiently removed is drained from the liquid passing-type capacitor.

In order to reduce the concentration of the scale component ions after the treatment using a liquid passing-type capacitor of the related art, it is necessary to couple a plurality of liquid passing-type capacitors. However, in this case, there has been a problem of an increase in the size of the device.

An object of the present invention is to provide a water treatment system capable of increasing the removal ratio of the scale component ions.

Solution to Problem

The present invention provides a water treatment system including a desalination unit including a pair of facing electrodes being charged to mutually reverse polarities, an interelectrode flow path being located between the electrodes and allowing water containing ions to circulate through, and ion-exchange membranes being disposed on the interelectrode flow path sides of the respective electrodes and permeating the ions toward the electrodes and carrying out a desalination treatment of desalinating the water by adsorbing the ions to the electrodes and a recycling treatment of desorbing the ions from the electrodes, in which one of the ion-exchange membranes is made of a polymer material having a sulfo group and selectively permeates divalent cations contained in water containing the ions toward the electrode, wherein a separation unit including a deposition unit that precipitates the divalent cations in water containing the ions in a solid form and deposits the divalent cations and a dehydration unit that separates the solid from water containing the solid discharged from the deposition unit is installed upstream of the desalination unit, and a supernatant liquid discharged from the deposition unit is sent to the desalination unit so as to be desalination-treated.

In the water treatment system of the present invention, a cation-exchange membrane for selectively permeating divalent cations is installed on the surface of the electrode in the desalination unit. The expression "selectively permeating" mentioned herein means that the permeation rate of divalent cations is higher than the permeation rates of other ions. In a desalination treatment, divalent cations contained in water, which is a treatment subject, permeate the cation-exchange membrane and are adsorbed to the electrode, but other ions such as monovalent cations do not easily permeate the cation-exchange membrane and thus are not easily adsorbed to the electrode and permeate the desalination unit. When at least divalent cations (alkali earth metals or $Mg^{2+}$) are removed, there is no concern that, in water after a treatment, a salt configured to include divalent cations (scale component) does not reach saturation solubility even when ions that do not easily constitute scales such as monovalent ions or anions pass through the desalination unit. Therefore, a state in which scales are not easily generated in a device in the latter part (for example, a device in which ions are concentrated) is formed. Meanwhile, in the desalination unit, a state in which the concentration of divalent cations is high in the electrode during a desalination treatment or in the interelectrode flow path during a recycling treatment is formed; however, in electrostatic desalination, desalination and recycling are repeated before scales are precipitated and thus scales are not generated.

Therefore, when the water treatment system of the present invention is used, it is possible to suppress the generation of a problem caused by the precipitation of scales. In addition, it is possible to decrease the content of the scale component ions contained in water after the treatment without increasing the device capacity. As a result, it is possible to improve the water collection rate of the water treatment system and to reduce the power consumption.

In the aspect, an ion concentrating unit that receives treated water that has been subjected to a desalination treatment and concentrates the ions in the treatment is installed downstream of the desalination unit. The ion concentrating unit includes at least one of a desalination device, a cooling tower, and a boiler.

As described above, the concentration of divalent cations in the treated water is significantly reduced using the water treatment system of the present invention. Even in a case in which this treated water is treated or used in the ion concentrating unit in which ions are concentrated in a system, it is possible to suppress the generation of scales in the ion concentrating unit.

In the aspect, a pH adjustment unit 30 that injects an alkali metal hydroxide into the treated water so as to adjust the pH of the water is preferably installed downstream of the desalination unit and upstream of the ion concentrating unit.

In water in which the scale component ions have been treated in the desalination unit, ion-form silica or non-ionized silica remains. These are also scale components. The dissolved state of silica varies depending on the pH and silica is significantly dissolved in water as ion-form silica at a pH of 9 or higher. In the present invention, the pH of the treated water is appropriately adjusted in the pH adjustment unit installed downstream of the desalination unit and a state in which silica is dissolved in the treated water is formed. Therefore, it is possible to reliably suppress the generation of the scales of silica in the ion concentrating unit.

According to the invention, a separation unit including a deposition unit that precipitates the divalent cations in water containing the ions in a solid form and deposits the divalent cations and a dehydration unit that separates the solid from water containing the solid discharged from the deposition unit is installed upstream of the desalination unit, and a supernatant liquid discharged from the deposition unit is sent to the desalination unit so as to be desalination-treated.

In a case in which the scale components configured to include divalent cations in treatment subject water has a solubility that is similar to or higher than the saturation solubility, it is possible to reduce the concentration of the scale component ions that are to flow into the desalination unit by employing the above-described constitution. Therefore, it is possible to prevent the generation of scales in the ion concentrating unit.

Advantageous Effects of Invention

The water treatment system of the present invention is capable of decreasing only the concentration of divalent cations contained in, particularly, water after the treatment without increasing the size of the device. For example, even in a case in which a device for concentrating ions is installed downstream, it is possible to suppress the generation of scales in the device.

Brief Description of Drawings

Fig. 1 is a schematic view of a water treatment system.
Fig. 2 is a schematic view of a desalination unit.
Fig. 3 is a graph illustrating an example of the removal ratios of a variety of ions through electrodialysis.
Fig. 4 is a schematic view illustrating a constitution for separating and collecting Ca in a solid form from concentrated water of the desalination unit.
Fig. 5 is a schematic view illustrating a constitution in which a separation unit is installed upstream of the desalination unit.

Description of Embodiments

<First embodiment>

Water to be treated contains alkali metal ions such as $Na^+$ and $K^+$, alkali earth metal ions such as $Ca^{2+}$ and $Ba^{2+}$, cations such as $Mg^{2+}$, and anions such as $F^-$, $Cl^-$, $Br^-$, $I^-$, $NO_3^-$, $SO_4^{2-}$, $HSO_4^-$, $SO_3^{2-}$, $HSO_3^-$, $CO_3^{2-}$, $HCO_3^-$, $PO_4^{3-}$, $HS^-$, and $S^{2-}$. Meanwhile, the above-listed ions are simply examples and the ions are not limited thereto.

Among these, alkali earth metal ions ($Ca^{2+}$, $Sr^{2+}$, and $Ba^{2+}$), a divalent metal ion of $Mg^{2+}$, sulfuric acid-based ions ($SO_4^-$, $HSO_4^-$, $SO_3^{2-}$, and $HSO_3^-$), carbonic acid-based ions ($CO_3^{2-}$ and $HCO_3^-$), a phosphoric acid ion ($PO_4^{3-}$), sulfide ions ($HS^-$ and $S^{2-}$) and $F^-$ are ions constituting a scale (scale component ions). When a state in which the concentration of the scale component ions in water is higher than the saturation concentration continues, scales are generated. The time taken for the scales to be generated from the time that the saturation concentration becomes excessive varies depending on the conditions such as the ion concentration and pH.

Water being treated using a water treatment system according to the present embodiment (water to be treated) is effective in a case in which the ratio (the concentration of divalent ions/the concentration of all ions) of the concentration of divalent ions to the concentration of all ions or the ratio (the concentration of divalent ions/the concentration of monovalent ions) of the concentration of divalent ions to the concentration of monovalent ions is high. As the water to be treated, there is water in which the scale component constituted by containing divalent ions is near the saturation solubility or higher than the saturation solubility (for example, blowdown water from a cooling tower, mine wastewater, and desulfurization wastewater) or water in which the scale component constituted by containing divalent ions is near the saturation solubility or lower than the saturation solubility (industrial wastewater, industrial wastewater-treated water, sewage-treated water, river water, and brine water).

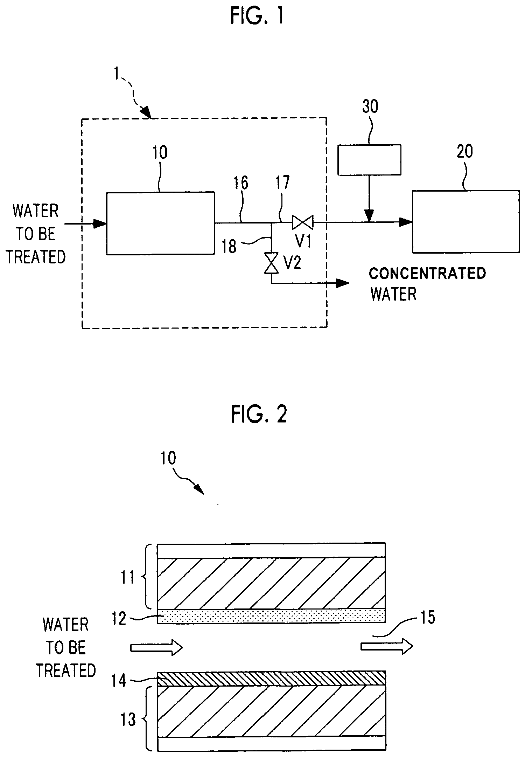

Fig. 1 is a schematic view of the water treatment system of the present embodiment. A water treatment system 1 includes a desalination unit 10. A discharge path 16 is provided downstream of the desalination unit 10. The discharge path 16 is branched into a treated water discharge path 17 and a concentrated water discharge path 18 in the middle of the route. Valves V1 and V2 are respectively installed for the treated water discharge path 17 and the concentrated water discharge path 18.

Fig. 2 is a schematic view of the desalination unit. As illustrated in Fig. 2, the desalination unit 10 includes a pair of facing porous electrodes 11 and 13 and an interelectrode flow path 15 allowing the water to be treated to circulate between the electrodes. An anion-exchange member 12 is installed on the interelectrode flow path-side surface of the electrode 11 and a cation-exchange member 14 is installed on the interelectrode flow path-side surface of the electrode 13.

The cation-exchange membrane 14 in the present embodiment is an ion-exchange membrane having a higher removal ratio of divalent cations than the removal ratios of other ions. That is, the cation-exchange membrane 14 is an ion-exchange membrane selectively permeating divalent cations (alkali earth metal ions such as $Mg^{2+}$). Among the above-described divalent ions, $Ca^{2+}$ and $Mg^{2+}$ are ions that are likely to be precipitated particularly as a scale and thus, as the cation-exchange membrane 14, an ion-exchange membrane selectively permeating $Ca^{2+}$ or $Mg^{2+}$ and both may

be used.

The cation-exchange membrane 14 is made of a polymer material having a sulfo group ($-SO_3H$). The sulfo group is a functional group having a large permselectivity coefficient of divalent cations with respect to monovalent cations. The polymer material is, for example, a styrene-divinyl benzene copolymer. The cation-exchange membrane 14 preferably does not have a functional group having a smaller permselectivity coefficient than the sulfo group, for example, a carboxyl group ($-COOH$), a phosphonic group ($-PO(OH)_2$), or a dicarboxylic acid imide group ($-N(COOH)_2$), but these functional groups may be included as long as the amount thereof is smaller than the amount of the sulfo group. In the present embodiment, a cation-exchange membrane in which the sulfo group with respect to all of the functional groups (the total of the sulfo group, the carboxyl group, the phosphonic group, and the dicarboxylic acid imide group) is 50% or more, preferably 90% or more, and more preferably 99% or more is used. Specifically, as the cation-exchange membrane 14, NEOSEPTA CMX, CL-25T, CH-45T, C66-5T (manufactured by ASTOM Corporation), SELEMION CMV (manufactured by AGC Engineering Co., Ltd.), ACIPLEX CK-1, DK-1, K-101 (manufactured by Asahi Kasei Chemicals Corporation) or the like can be used.

In the desalination unit 10 in the present embodiment, the removal ratio of divalent cations by the cation-exchange membrane 14 is 95% or more and preferably 98% or more and the removal ratios of other cations are equal to or lower than the removal ratio of the divalent cations. Generally, among ions contained in the above-described water to be treated, the majority thereof are $Na^+$. Therefore, in the present embodiment, the removal ratio of $Na^+$ by the cation-exchange membrane 14 is preferably 80% or less. The type of the cation-exchange membrane 14 is selected and the device design and the water treatment conditions are set so as to achieve the above-described removal ratio.

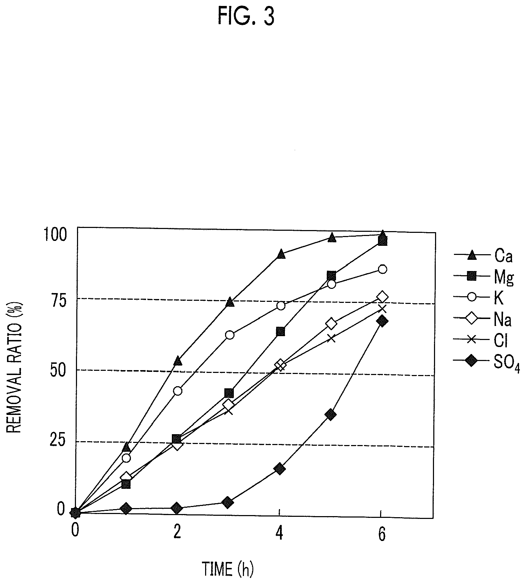

Specifically, Fig. 3 is a graph illustrating an example of the removal ratios of a variety of ions through the electrodialysis of the ion-exchange membrane (sources: Yuki Toyota, "Development of Control System of Mineral Ions in Deep Sea-Water", dissertation (2002) of Kochi University of Technology, URL:www.kochitech.ac.jp/library/ron/2002/g5/M/1055019.pdf). Fig. 3 is the results of electrodialysis using 10 pairs of a strongly acidic cation-exchange membrane having a membrane area of 1.72 $dm^2$/membrane and a strongly basic anion-exchange membrane. In Fig. 3, the removal ratios of $Ca^{2+}$ and $Mg^{2+}$ of 95% or more are achieved after six minutes from the initiation of the electrodialysis, but the removal ratio of monovalent ions is 95% or less and the removal ratio of $Na^+$ is 80% or less.

In order to achieve the above-described divalent cation removal ratio within a predetermined time, the device design and the treatment conditions are set according to the following guidelines.

The removal ratio E of divalent cations by the ion-exchange membrane is expressed by Equation (1)

[Equation 1]

$$E = 1 - \frac{C_{out}}{C_{in}} = \frac{i\eta n A_0}{QFC_{in}} \qquad \cdots \quad (1)$$

$C_{in}$: The concentration of ions in the water to be treated (Eq/$m^3$)
$C_{out}$: The concentration of ions in the treated water (Eq/$m^3$)
$A_0$: The area of the ion-exchange membrane ($m^2$)
Q: The amount of the treated water ($m^3$/h)
F: Faraday constant (A·h/Eq)
i: Current density (A/$m^2$)
$\eta$: Current efficiency (-)
n: The number of the ion-exchange membranes (-)

According to Equation (1), in order to increase the removal ratio of divalent cations, at least any one of an increase in the area $A_0$ of the ion-exchange membrane, an increase in the current density i, an increase in the number n of the ion-exchange membranes, an increase in the current efficiency $\eta$, and a decrease in the amount Q of the treated water may be carried out. The current density i has a correlation with the voltage applied to an electrode in the desalination unit 10 and it is possible to increase the current density i by increasing the applied voltage.

Here, the treatment time necessary per unit liquid equivalent is represented by 1/Q and is expressed by Equation (2) by transforming Equation (1).

[Equation 2]

$$1/Q = \frac{EFC_{in}}{i\eta n\, A_0} \quad \cdots \quad (2)$$

From Equation (2), it can be understood that, in order to shorten the treatment time 1/Q and obtain a predetermined removal ratio (that is, in a case in which the removal ratio E is constant), at least one parameter of the area $A_0$ of the ion-exchange membrane, the current density i, the number n of the ion-exchange membranes, and the current efficiency $\eta$ may be increased. As described above, the current density i has a correlation with the applied voltage of the desalination unit 10 and thus the applied voltage is increased in order to increase the current density i.

Therefore, in a desalination step described below, the device capacity such as the area $A_0$ of the cation-exchange membrane 14 and the number n of the cation-exchange membranes 14 or the water treatment conditions such as the applied voltage and the amount of the treated water Q are appropriately set so that the above-described removal ratio of divalent cations can be achieved within the predetermined time.

When, among the above-described scale component ions, the alkali earth ions or $Mg^{2+}$, which are divalent metallic ions, are removed, the precipitation of scales is suppressed even when anions, which serve as the scale components, remain in the treated water. Therefore, in the present embodiment, an anion-exchange membrane 12 may not have selectivity for the difference in the valences of ions.

A method for carrying out a treatment for removing ions in the water to be treated using the water treatment system 1 will be described below.

The water to be treated having the above-described properties flows into the desalination unit 10. In the desalination unit 10, the following desalination step and recycling step are carried out.

(Desalination step)

Voltage is applied to the respective electrodes 11 and 13 so that the electrode 11 is positively charged and the electrode 13 is negatively charged in the desalination unit 10. The above-described electrically conductive state will be referred to as "positive". At this time, the valve V1 is opened and the valve V2 is closed.

The water to be treated containing ions passes through the positively-charged interelectrode flow path 15 between the electrodes 11 and 13. At this time, anions in the water to be treated permeate the anion-exchange membrane 12 and are adsorbed to the electrode 11. At the same time, divalent cations such as $Ca^{2+}$ and $Mg^{2+}$ in the water to be treated permeate the cation-exchange membrane 14 and are adsorbed to the electrode 13. Some of monovalent cations (the amount corresponding to the permeation rate of monovalent cations) permeate the cation-exchange membrane 14 and are adsorbed to the electrode 13, but some of monovalent cations fail to permeate the cation-exchange membrane 14 and pass through the interelectrode flow path 15.

Divalent cations are removed from the water to be treated through the desalination step and the concentration of divalent cations in the treated water is reduced.

The water to be treated that has passed through the interelectrode flow path 15 is discharged from the desalination unit 10 as treated water, passes through the treated water discharge path 17, is discharged outside the system of a desalination treatment device, and is collected. Through the desalination step, the concentration of divalent cations contained in the treated water is reduced compared with the concentration of divalent cations in the water to be treated.

(Recycling step)

After the desalination step is carried out for a predetermined time, voltage is applied to the respective electrodes 11 and 13 so that the electrode 11 is negatively charged and the electrode 13 is positively charged. That is, the electrodes fall into the "reverse" electrically conductive states. When the electrodes 11 and 13 fall into the reverse electrically conductive states, at the same time, the valve V1 is closed and the valve V2 is opened. As a result, the recycling step begins.

In the recycling step, ions adsorbed in the desalination step are desorbed from the electrodes 11 and 13 and return to the interelectrode flow path 15. The cations and the anions that have returned to the interelectrode flow path 15 are not capable of permeating the anion-exchange membrane 12 and the cation-exchange membrane 14 and are thus accumulated in the interelectrode flow path 15. After a predetermined amount of time elapses, water having a low ion concentration such as clean water (fresh water) is supplied from a system not illustrated in Figs. 1 and 2 and the divalent ions released into the interelectrode flow path 15 are discharged from the desalination unit 10. Water discharged from the desalination unit 10 passes through the concentrated water discharge path 18 as concentrated water and is discharged outside the system of the desalination treatment device 1.

The desalination step and the recycling step are alternately carried out at intervals of a predetermined time. For example, the desalination step and the recycling step are carried out respectively for 1 minute to 60 minutes and preferably for 1 minute to 10 minutes.

In the water treatment system of the present embodiment, as illustrated in Fig. 1, there is a case in which an ion concentrating unit 20 is installed on the downstream side of the desalination unit 10 in the treated water discharge path 17. The ion concentrating unit 20 is a device for further concentrating ions in the treated water discharged from the desalination unit 10. Examples of the ion concentrating unit 20 include a desalination device, a boiler, and a cooling tower.

Examples of the desalination device include a reverse osmosis membrane device, an electrodialysis device (ED), an electrode deionization device (EDI), and an ion-exchange resin device. Additionally, it is also possible to install an ion-exchange membrane that has the same constitution as the desalination unit 10 but does not have ion selectivity. These desalination devices remove ions (monovalent cations, anions, and the like) remaining in the treated water of the desalination unit 10. In order to increase the removal ratio of ions, a constitution in which a plurality of desalination devices is connected to each other in series may be employed.

Since the concentration of divalent cations in water, which serve as scales, is significantly reduced using the water treatment system 1 of the present embodiment, the precipitation of scales in the desalination device for further concentrating ions is suppressed.

In a case in which the reverse osmosis membrane device is installed as the ion concentrating unit 20, an evaporator or a crystallizer may be installed downstream of the concentrating unit side of the reverse osmosis membrane device. Water is evaporated from concentrated water in the evaporator or the crystallizer, ions contained in concentrated water are precipitated in a solid form, and are collected in a solid form.

In a case in which the reverse osmosis membrane device is installed as the ion concentrating unit 20, as illustrated in Fig. 1, a pH adjustment unit 30 is preferably further installed in the treated water discharge path 17.

In the water to be treated, as other scale components, ion-form silica or non-ionized solid-form silica is contained. The ion-form silica has a low removal ratio in the desalination unit and thus permeates the water treatment system 1. In addition, the non-ionized silica also permeates the water treatment system 1. In the treated water that has been treated in the water treatment system 1, ion-form silica or solid-form silica is contained.

The solubility of silica present in water varies depending on pH and silica is significantly dissolved in water as ion-form silica at a pH of 9 or higher. The pH adjustment unit 30 injects an alkali agent into water so that the pH (measured using a pH meter not illustrated in Fig. 1) of the treated water passing through the treated water discharge path 17 reaches 9 or higher. Here, the alkali agent refers to an aqueous solution of a hydroxide of an alkali metal such as Na or K.

When the pH is adjusted using the pH adjustment unit 30, it is possible to suppress the generation of scales in a case in which the reverse osmosis membrane device is installed in the latter part.

In a case in which the boiler is installed as the ion concentrating unit 20, water having a reduced concentration of divalent cations is used for the water supply for the boiler. When the water is used for the water supply for the boiler, water is evaporated from boiler water and thus the boiler water before make-up falls into a state of a high ion concentration. Therefore, when the water supply for the boiler in which the concentration of divalent cations is significantly reduced using the water treatment system 1 of the present embodiment is used, it is possible to prevent the generation of scales due to condensation in the boiler.

In a case in which the cooling tower is installed as the ion concentrating unit 20, heat is exchanged between the cooling tower and high-temperature exhaust gas discharged from the treated water of the water treatment system 1, a boiler, and the like. Some of water turns into vapor due to this heat exchange and ions in the treated water in the cooling tower are concentrated. Some of the concentrated water is discharged from the cooling tower as blow water.

When the water treatment system 1 of the present embodiment and the cooling tower are combined together, water having a sufficiently-reduced concentration of divalent cations is used in the cooling tower. Therefore, it is possible to increase the degree of condensation in the cooling tower and the usage efficiency of water in the cooling tower is improved. In addition, since the concentration of divalent cations is significantly reduced using the water treatment system 1 of the present embodiment, it is possible to prevent the generation of scales due to condensation in the cooling tower.

In a case in which the boiler or the cooling tower is installed as the ion concentrating unit 20, a constitution in which the boiler or the cooling tower is combined with the desalination device and treated water from the desalination device is sent to the boiler or the cooling tower may be employed. In a case in which the boiler or the cooling tower is combined with the reverse osmosis membrane device, it is possible to employ a constitution in which water (water from which ions are removed) discharged from the evaporator and the crystallizer installed downstream of the concentrating unit side of the reverse osmosis membrane device is sent to the cooling tower or the boiler.

Meanwhile, since the water treatment system 1 of the present embodiment generates water having a reduced concentration of divalent cations, it is also possible to use the water as laundry water and the like in which the presence of alkaline-earth metallic ions causes a problem.

<Second embodiment> (not according to the invention)

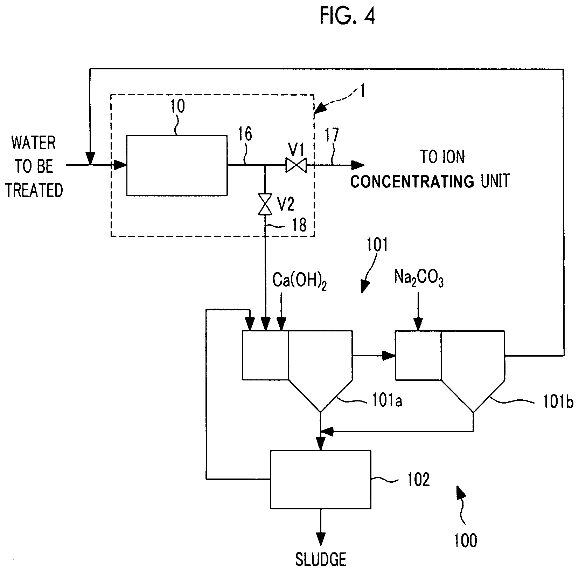

Fig. 4 is a schematic view illustrating the constitution for separating and collecting Ca in a solid form from concentrated water of the desalination unit in the water treatment system of the first embodiment.

The concentrated water discharge path 18 of the water treatment system 1 is connected to a separation unit 100. The separation unit 100 includes a deposition unit 101 and a dehydration unit 102. Fig. 4 illustrates an example in which $CaCO_3$ is collected from concentrated water mainly containing $Ca^{2+}$ and $CO_3^{2-}$ as the scale component ions.

The separation unit 100 in Fig. 4 includes a first deposition device 101a and a second deposition device 101b as the deposition unit 101. The concentrated water discharge path 18 is connected to the first deposition device 101a and supplies concentrated water from the desalination unit 10 to the first deposition device 101a. $Ca(OH)_2$ is injected into the first deposition device 101a for the adjustment of the pH. When $CaCO_3$ is oversaturated, $CaCO_3$ is precipitated and is deposited on the bottom portion of the first deposition device 101a. Heavy metals contained in the concentrated water are also deposited on the bottom portion of the first deposition device 101a.

The first deposition device 101a is connected to the second deposition device 101b. In a case in which the concentration of $Ca^{2+}$ is relatively higher than the concentration of $Ca_3^{2-}$ in the first deposition device 101a, a supernatant liquid containing $Ca^{2+}$ is sent to the second deposition device 101b from the first deposition device 101a. $Na_2CO_3$ is injected into the second deposition device 101b, $Ca^{2+}$ is precipitated in a $CaCO_3$ form, and is deposited on the bottom portion.

The supernatant liquid in the second deposition device 101b contains the scale component ions that cannot be separated in the first deposition device 101a and the second deposition device 101b. In Fig. 4, the supernatant liquid in the second deposition device 101b is discharged from the second deposition device 101b and is circulated to the upstream side of the desalination unit 10.

The bottom portions of the first deposition device 101a and the second deposition device 101b are connected to the dehydration unit 102. Water containing deposits is discharged from the bottom portions of the first deposition device 101a and the second deposition device 101b and is sent to the dehydration unit 102. The dehydration unit 102 separates water and solid materials and collects sludge containing $CaCO_3$. Water separated in the dehydration unit 102 is circulated to the first deposition device 101a.

<Third embodiment>

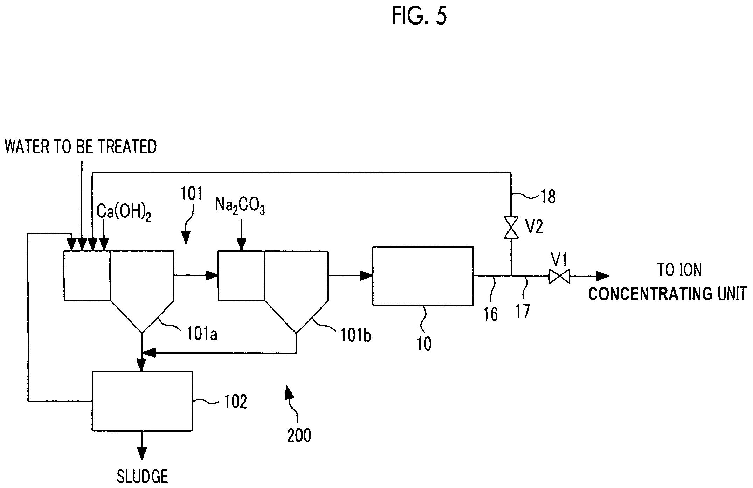

Fig. 5 is a schematic view illustrating the constitution in which a separation unit is installed upstream of the desalination unit 10 as a third embodiment of the present invention. Fig. 5 illustrates an example of a case in which the scale component ions in the water to be treated are mainly $Ca^{2+}$ and $CO_3^{2-}$. In Fig. 5, the same reference signs are given to the same constitutions as those in Fig. 4.

Similar to the second embodiment, a separation unit 200 in the third embodiment includes the deposition unit 101 and the dehydration unit 102. The supernatant liquid in the second deposition device 101b is sent to the desalination unit 10. The constitution of the separation unit 200 except for what has been described above is the same as in the second embodiment.

In a case in which $CaCO_3$ is collected as described above, the pH is adjusted to approximately 10 in the deposition unit 101 as described above, the saturation solubility of $CaCO_3$ is decreased, and it becomes easy for $CaCO_3$ to be precipitated. On the other hand, in the desalination unit, conditions under which $CaCO_3$ is not easily precipitated (specifically, a pH of approximately 7) are preferred. Therefore, in a case in which $CaCO_3$ is collected, it is preferable to provide a neutralization unit (not illustrated) downstream of the second deposition device 101b, adjust the pH of the supernatant liquid discharged from the second deposition device 101b to approximately 7, and then send the supernatant liquid to the desalination unit.

In a case in which the main scale component ions of the water to be treated are combinations other than $Ca^{2+}$ and $CO_3^{2-}$ as well, similar to the second embodiment, as long as the separation unit is provided, it is possible to reduce the concentrations of the scale component ions other than $Ca^{2+}$ and $CO_3^{2-}$ and collect the scale component ions in a solid form. However, the solubility of $CaSO_4$ in water is low. In a case in which the separation unit mainly collects $CaSO_4$, the second deposition device becomes unnecessary and a constitution in which the supernatant liquid in the first deposition device is circulated to the desalination unit may be employed.

Which constitution is employed between the second embodiment and the third embodiment is appropriately selected depending on the properties of the concentrated water and the properties of the water to be treated.

For example, in the case of water to be treated having a high concentration of divalent cations and a higher solubility of the scale components than the saturation solubility such as blowdown water from a cooling tower, mine wastewater, or desulfurization discharged water, the desalination treatment in the desalination unit 10 is not sufficient and the concentration of the scale component ions in the treated water becomes high. In a case as described above, it is effective to reduce the concentration of $Ca^{2+}$ flowing into the desalination unit 10 as the concentration of the third embodiment for the prevention of the precipitation of scales.

Reference Signs List

| | |
|---|---|
| 1 | WATER TREATMENT SYSTEM |
| 10 | DESALINATION UNIT |
| 11, 13 | ELECTRODE |
| 12 | ANION-EXCHANGE MEMBRANE |
| 14 | CATION-EXCHANGE MEMBRANE |
| 15 | INTERELECTRODE FLOW PATH |
| 16 | DISCHARGE PATH |
| 17 | TREATED WATER DISCHARGE PATH |
| 18 | CONCENTRATED WATER DISCHARGE PATH |
| 20 | ION CONCENTRATING UNIT |
| 30 | pH ADJUSTMENT UNIT |
| 100, 200 | SEPARATION UNIT |
| 101 | DEPOSITION UNIT |
| 101a | FIRST DEPOSITION DEVICE |
| 101b | SECOND DEPOSITION DEVICE |
| 102 | DEHYDRATION UNIT |

**Claims**

1. A water treatment system, comprising:

   a desalination unit (10) including a pair of facing electrodes being charged to mutually reverse polarities, an interelectrode flow path being located between the electrodes and allowing water containing ions to circulate through, and ion-exchange membranes being disposed on the interelectrode flow path sides of the respective electrodes and permeating the ions toward the electrodes and carrying out a desalination treatment of desalinating the water by adsorbing the ions to the electrodes and a recycling treatment of desorbing the ions from the electrodes, in which one of the ion-exchange membranes is made of a polymer material having a sulfo group and selectively permeates divalent cations contained in water containing the ions toward the electrode, wherein a separation unit (100, 200) including a deposition unit (101), which is configured for precipitating the divalent cations in water containing the ions in a solid form and depositing the divalent cations, and a dehydration unit (102) for separating the solid from water containing the solid discharged from the deposition unit (101) is installed upstream of the desalination unit, and, when in use, a supernatant liquid can be discharged from the deposition unit (101) and sent to the desalination unit (10) so as to be desalination-treated.

2. The water treatment system according to Claim 1, wherein an ion concentrating unit (20) that receives treated water that has been subjected to a desalination treatment and concentrates the ions in the treated water is installed downstream of the desalination unit (10).

3. The water treatment system according to Claim 2, wherein the ion concentrating unit (20) includes at least one of a desalination device, a cooling tower, and a boiler.

4. The water treatment system according to Claim 2 or 3, wherein a pH adjustment unit (30) that injects an alkali metal hydroxide into the treated water so as to adjust the pH of the water is installed downstream of the desalination unit (10) and upstream of the ion concentrating unit (20).

**Patentansprüche**

1. Wasserbehandlungssystem, umfassend:

eine Entsalzungseinheit (10), welche ein Paar gegenüberliegender, geladener Elektroden mit entgegengesetzter Polarität, einen zwischen den Elektroden angeordneten Interelektroden-Strömungspfad, welcher es Ionen enthaltendem Wasser ermöglicht, durch diesen zu zirkulieren, sowie Ionenaustauschermembranen, welche auf den Interelektroden-Strömungspfadseiten der jeweiligen Elektroden angeordnet sind und die Ionen in Richtung der Elektroden hindurchtreten lassen, umfasst und eine Entsalzungsbehandlung, die das Entsalzen des Wassers durch Adsorbieren der Ionen an die Elektroden vorsieht, und eine Rückgewinnungsbehandlung, die das Desorbieren der Ionen von den Elektroden vorsieht, durchführt, und in welcher eine der Ionenaustauschermembranen aus einem eine Sulfogruppe beinhaltenden Polymermaterial besteht und zweiwertige Kationen, die in einem die Ionen enthaltenden Wasser enthalten sind, selektiv in Richtung der Elektrode hindurchtreten lässt, wobei eine Trenneinheit (100, 200), welche eine zur Ausfällung der zweiwertigen Kationen in fester Form aus einem die Ionen enthaltenden Wasser sowie zur Abscheidung der zweiwertigen Kationen konzipierte Abscheidungseinheit (101) und eine zur Abtrennung des Feststoffs aus einem aus der Abscheidungseinheit (101) abgeführten, den Feststoff enthaltenden Wasser konzipierte Entwässerungseinheit (102) umfasst, stromaufwärts der Entsalzungseinheit positioniert ist, und

während des Betriebs eine überstehende Flüssigkeit aus der Abscheidungseinheit (101) abgeführt und zur Entsalzungseinheit (10) transportiert werden kann, um auf diese Weise eine Entsalzungsbehandlung zu bewirken.

2. Wasserbehandlungssystem nach Anspruch 1, wobei eine Ionenanreicherungseinheit (20), welche aufbereitetes, einer Entsalzungsbehandlung unterzogenes Wasser aufnimmt und die Ionen in dem aufbereiteten Wasser anreichert, stromabwärts der Entsalzungseinheit (10) positioniert ist.

3. Wasserbehandlungssystem nach Anspruch 2, wobei die Ionenanreicherungseinheit (20) zumindest eines ausgewählt aus einer Entsalzungsvorrichtung, einem Kühlturm und einem Verdampfer umfasst.

4. Wasserbehandlungssystem nach Anspruch 2 oder 3, wobei eine pH-Justiereinheit (30), welche ein Alkalimetallhydroxid in das aufbereitete Wasser injiziert, um auf diese Weise den pH des Wassers zu justieren, stromabwärts der Entsalzungseinheit (10) und stromaufwärts der Ionenanreicherungseinheit (20) positioniert ist.

## Revendications

1. Système de traitement de l'eau, comprenant :

une unité de dessalement (10) incluant une paire d'électrodes en regard chargées à des polarités mutuellement inverses, un chemin d'écoulement entre électrodes situé entre les électrodes et permettant à de l'eau contenant des ions de circuler à travers, et des membranes échangeuses d'ions disposées sur les côtés du chemin d'écoulement entre électrodes des électrodes respectives et imprégnant les ions vers les électrodes et réalisant un traitement de dessalement pour dessaler l'eau en adsorbant les ions sur les électrodes et un traitement de recyclage pour désorber les ions des électrodes, dans lequel l'une des membranes échangeuses d'ions est réalisée en un matériau polymère ayant un groupe sulfo et imprègne sélectivement des cations divalents contenus dans l'eau contenant les ions vers l'électrode,
dans lequel une unité de séparation (100, 200) incluant une unité de dépôt (101), qui est configurée pour précipiter les cations divalents dans l'eau contenant les ions sous forme solide et déposer les cations divalents, et une unité de déshydratation (102) pour séparer la matière solide de l'eau contenant la matière solide évacuée de l'unité de dépôt (101) est installée en amont de l'unité de dessalement, et lors d'une utilisation, un liquide surnageant peut être évacué de l'unité de dépôt (101) et envoyé à l'unité de dessalement (10) de façon à être traité par dessalement.

2. Système de traitement de l'eau selon la revendication 1, dans lequel une unité de concentration d'ions (20) qui reçoit l'eau traitée qui a été soumise à un traitement de dessalement et concentre les ions dans l'eau traitée est installée en aval de l'unité de dessalement (10).

3. Système de traitement de l'eau selon la revendication 2, dans lequel l'unité de concentration d'ions (20) inclut au moins l'un d'un dispositif de dessalement, d'une tour de refroidissement et d'une chaudière.

4. Système de traitement de l'eau selon la revendication 2 ou 3, dans lequel une unité d'ajustement de pH (30) qui injecte un hydroxyde de métal alcalin dans l'eau traitée de façon à ajuster le pH de l'eau est installée en aval de l'unité de dessalement (10) et en amont de l'unité de concentration d'ions (20).

FIG. 1

FIG. 2

FIG. 3

## FIG. 4

WATER
TO BE
TREATED

TO ION
CONCENTRATING UNIT

$Ca(OH)_2$

$Na_2CO_3$

SLUDGE

EP 2 962 997 B1

FIG. 5

EP 2 962 997 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4135802 B
- WO 2012129532 A1
- US 2010242995 A1

**Non-patent literature cited in the description**

- **YUKI TOYOTA.** Development of Control System of Mineral Ions in Deep Sea-Water. Kochi University of Technology, 2002